# EUROPEAN PATENT SPECIFICATION

(11) **EP 2 921 977 B1**
(45) Date of publication and mention of the grant of the patent: **20.09.2023**
(21) Application number: 14160345.6
(22) Date of filing: 17.03.2014
(51) Int. Cl.: G06F 30/13, G06F 30/00, E01C 5/00, E04B 1/19, G06F 111/20

(54) **METHOD FOR GENERATING A KIT OF ELEMENTS FOR COMPOSING OR CONSTRUCTING DIVERSE GAP-LESS 3D STRUCTURES AND SUCH KIT OF ELEMENTS**
VERFAHREN ZUR ERZEUGUNG EINES BAUSATZES ZUM ERSTELLEN ODER BAUEN VERSCHIEDENER LÜCKENLOSER 3D-STRUKTUREN UND BAUSATZ
PROCÉDÉ PERMETTANT DE GÉNÉRER UN KIT D'ÉLÉMENTS POUR COMPOSER OU CONSTRUIRE DIVERSES STRUCTURES EN 3D SANS ESPACE ET UN TEL KIT D'ÉLÉMENTS

(43) Date of publication of application: 23.09.2015
(73) Proprietor: Jonas, Katrin, London E9 7QP (GB)
(72) Inventor: Jonas, Katrin, London E9 7QP (GB)
(74) Representative: Patentanwälte Geyer, Fehners & Partner mbB

(56) References cited:
- WO-A1-2009/128111
- US-A1- 2003 108 388
- US-A1- 2010 139 202
- Katrin Jonas ET AL: "ECSS - Evolutionary Component Surface System - A tool for architectural form generation and form optimization", , 12 July 2006 (2006-07-12), pages 1-4, XP055138840, Retrieved from the Internet: URL:ftp://ftp.cs.bham.ac.uk/pub/authors/W. B.Langdon/biblio/gecco2006etc/papers/wksp1 36.pdf [retrieved on 2014-09-08]
- CHI-WING FU ET AL: "K-set tilable surfaces", ACM TRANSACTIONS ON GRAPHICS (TOG), ACM, US, vol. 29, no. 4, 26 July 2010 (2010-07-26), pages 1-6, XP058041061, ISSN: 0730-0301, DOI: 10.1145/1778765.1778781
- Anonymous: "Dirt, Slope. Sand, Gravel, fluid-ish. Snow Biome suggestion", Minecraft Forum, 24 September 2010 (2010-09-24), pages 1-10, XP055139303, Retrieved from the Internet: URL:http://www.minecraftforum.net/forums/m inecraft-discussion/suggestions/11943-dirt -slope-sand-gravel-fluid-ish-snow-biome [retrieved on 2014-09-10]

## Description

The invention relates to kit of elements adapted for composing or constructing diverse, gap-less 3D structures, in particular to a kit of elements which can be used for designing of buildings as well as constructing such buildings. The invention further relates to a method of generating such kit of elements.

There is a trend in architecture to provide buildings with surface geometries which go beyond usual planar surfaces and to use curved surfaces for building shells, roofs or support constructions of such structures. Nowadays 3D curved surfaces are rather troublesome to design and constructing such requires custom-made components. Both aspects significantly contribute to building costs.

Katrin Jonas et al: "ECSS - Evolutionary Component Surface System - A tool for architectural form generation and form optimization, discloses using a set of elements of the frame type for constructing a 3D-structure. Chi-Wing Fu et al: "K-set tillable surfaces", ACM TRANSACTIONS ON GRAPHICS (TOG), ACM, US, Vol. 29, no. 4, July 26, 2010; uses a numeric algorithm for generating a set of tiles for constructing a 3D-structure.

US 2010/0139202 A1 and WO 2009/128111 A1 disclose to assemble 3D structures rom bars and joints.

The invention addresses this need in architecture and the building industry. It is an objective of the invention to provide a kit of elements which allows easy design of diverse, gap-less 3D structures.

It is a further object of the invention to provide a kit of elements such that these elements can also be used as components for constructing structures.

It is a further object of the invention to provide a kit of elements having a geometry which can be used for composing as well as for construction of a structure, wherein the interface of neighbouring elements allows for easy connections of neighbouring elements.

It is a further object of the invention to provide a method for generating a kit of elements which is parametric to allow a user to influence the number, footprint and thickness of elements and the resolution at which a curved surface can be composed from the kit of elements.

The invention is defined by independent claims 1 and 9.

The invention relates to building a structure in real. This is herein referred to as "constructing" a structure from the kit of elements.

The structures may be one or more of the following: Building hulls (envelopes), roofs, facades, internal walls, partitions, shells, cladding, substructures, frame structures and surface structures.

The invention is based on the principle of a unit cell. The unit cell is a geometric principle that allows families of elements, so called kits, to be generated. The features of the system are:
- the unit cell model derives elements from the controlled variations of a polygonal shape,
- the elements can be assembled to form a diversity of global 3D geometries,
- these geometries are articulated 3D surfaces, preferably gap-less.

The unit cell itself is a three-dimensional parametric reference frame that is a part of a larger three-dimensional grid. The main characteristic of the elements which are created by a particular unit cell is that the same elements can be assembled to form a wide range of different surface geometries. The rules controlling how the elements connect are intrinsic in their geometry and defined by the edges along which the elements connect. An element can fit with copies of itself, or other elements and their rotations, if they share a compatible edge. Each element of the kit is unique and yet shares certain geometric edge features with the other elements of the kit. Shared edge features allow the parts to be connected to each other in different ways; features which distinguish them create the differentiation and articulation of the 3D surface to be build.

The key aspects of the unit cell are: the control of the number of elements which are created, and which are used for creating gap-less surface or frame structures; the recombinability of these elements, so that the same set of parts can form many diverse 3D surface configurations, not just one. The system also considers the orthogonal physical offset of the parts, and through the explicit discreteness of their geometry, the transferability between different modelling and analysis applications. The local geometric elements are controlled upfront, and yet the elements which evolve are not overlapping or branching out, but are continuous entities (unless openings are desired).

The method and kit represent the building elements generically. The elements are realized to construct a building or building structure. This involves building the elements from material, e.g. from concrete, glass, metal etc.

Frame-type elements would be connected at compatible edges. To obtain such compatible edges, the nodes of the unit cells are connected by an edge which is selected from a pre-defined set of edge shapes. For each z level step difference a certain edge shape is provided. This ensures that edges having the same inclination (as related to the z level spacing difference) are compatible and respective elements having such compatible edges can be connected easily.

This principle is used for the star-shaped element rods which are to be connected, i.e. have the same inclination as regarding the angle between the centre point and the end of the rods have the same rod shape. At a first glance this feature seems not to be essential, as the ends of the rods might be connected even for different shapes of the rods. However, the feature that only rods of the same shape are connected has the result that any frame within a network of connected star-shaped elements comes from a limited number of geometric forms. The feature that the rodshaped elements for any inclination (referred to the angle between the centre point and the nodal point, i.e. the end of the rod) have the same rod shape allows an easy filling of the open fields between an interconnected mesh of rods, as these open fields are of very limited geometrical variation. A simple set of elements allows to fill such mesh fully (or with pre-defined gaps, if desired).

The method of generating a kit of elements first defines the unit cell. In the most simple configuration, the unit cell can have a box form, i.e. the cross-section of the unit cell is a square. This is a very simple example of a generalized cylinder. It is important to note that this specification understands the terms "simple polygon" and "cylinder" according to standard mathematical meaning. A cylinder is not restricted to circular cross-sections and can be generated by translating a footprint along an axis, here the z axis. According to this methodology, a square box is also a cylinder. When generating a cylinder the footprint needs not to be translated along an axis being perpendicular to the footprint. This is only the case when the z axis is an axis of a Cartesian coordinate system. The cylinder is then a right cylinder.

The certain plane is usually a x-y plane of a rectangular coordinate system. However, oblique axes are possible, too.

The unit cell has a side surface having edges above the corners of the polygonal footprint of the unit cell. In the box-type unit cell, these edges are the vertical edges of the box. The nodal points are located on the cell edges, wherein each cell edge has the same number of nodal points and the nodal points on the cell edges have the same equidistant spacing in z direction, i.e. along the edge. This results in the fact that the nodal points of each unit cell are organized in levels parallel to the certain plane and equidistant in the z direction.

A box-type unit cell has three nodal points at each cell edge resulting in twelve nodal points with each level containing four nodal points in the square configuration of the footprint of the box. The individual elements of the kit of elements are generated by selecting on each edge of the box a nodal point. An important aspect of the invention provides a rule how much z spacing is allowed between neighbouring nodal points. These are nodal points which belong to neighbouring cell edges. This maximum allowed number of level step differences in z direction has a strong influence on the number of possible elements and, moreover, on the question how inclined an element might be. According to this concept, all elements generated have the same footprint in the x-y plane. The unit cell concept further has the effect that the inclinations of element edges are either zero (refer to the x-y plane) or have an angle with the x-y plane which comes from a fixed group of discrete angles. The above mentioned feature of equidistant spacing of the levels in which the nodal points are organized can be dispensed within certain applications. If, however, this feature is used, it results in the fact that the mentioned set of angles only comprises angles being the *arcsin* of the n-fold of the z level spacing.

A kit of elements is created by going through all combinations of vertex displacement within a specific unit cell. In a simple embodiment, the unit cell is of a square footprint and has two levels. The distance between the central horizontal plane, and the upper and the lower planes is defined as one unit step. The starting point is four vertices in a plane, and the process goes through all of the permutations of placing vertices one unit step up or down, or keeping them level. Thus, a rule which only allowed one unit step between the neighbouring vertices was applied. This produces a kit with six unique elements, one of them a flipped version of another, i.e. these two elements are symmetrical to each other in reference to the x-y plane. The form with only one vertex lifted was in principle the same as the one with one vertex lowered.

In some embodiments, however, the two symmetrical elements are still distinctive, in particular when it comes to a generalisation of the representation of materials and types of connections. For example, if the elements represented a build-up of different layers of materials, then the elements must not be flipped upside down.

The method using one or several unit cells works as an "element factory". The name indicates its utility as a custom element generator. It can be implemented as a separate class to a plugin, e.g. can be written in the C# language for the host CAD application Rhinoceros which is well known to designers and architects. Elements are generated under user specifications at the beginning of the method. It is an open generative engine which creates element kits on the fly, in accordance with the user input. The method is an extendable parametric system, which is preferred over the idea of supplying a hard-coded, and thereby fixed, geometry set.

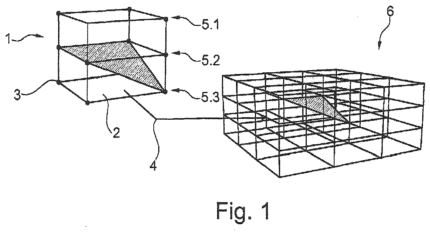

The parameters of the element factory are:
- Number of edges: the number of edges that the polygon of the unit cell has.
- Length of the edges: this parameter refers to the width and the length of the unit cell. Facing element edges must be of the same length, but non-facing element edges can be of different lengths. For instance, the square tile element of Fig. 1 has four edges and in projection all have the same length, but a rectangle would have two different types of edge length.
- Height of the unit cell: the measure of one level step in the z-direction. The height of the unit cell affects the angle between the neighbouring elements and thereby the length of that edge.
- Number of allowed steps in the z-direction (stepping value): the variable that indicates how many levels a vertex can go up or down relative to its neighbours, when iterating through the combinations of vertex positions. A stepping value of one, for example, specifies that the vertex can go up or down by one level. Each setting produces a particular kit of elements.

The invention is described in more detail with reference to the drawings in which:
- Figure 1: shows a unit cell and how it is assembled to a larger orthogonal grid,
- Figure 2: shows an embodiment how to generate a kit of elements,
- Figures 3-5: show different building parts obtained by combining elements of the kit,
- Figure 6: shows an isometric view of the unit cell frame of Figure 1 together with several star-shaped elements generated according to the principle of the embodiment of Figure 2,
- Figure 7: shows a building part,
- Figure 8: shows a similar building part build from star-shaped elements which have been generated according to the principle of the embodiment of Figure 2,
- Figure 9: shows another building part composed or constructed from star-shaped elements generated according to the principle of Figure 2,
- Figure 10: shows a plane view of the four types of star-shaped elements used in the building part,
- Figure 11: shows a side view of the elements of Figure 10,
- Figure 12: shows a perspective view of the elements of Figure 11,
- Figure 13: shows a building part similar to that of Figure 9 composed or constructed from star-shaped elements similar to those of Figures 10-12, and
- Figure 14: shows an isometric view of the elements used to compose or construct the building part of Figure 13 in a view similar to that of Figure 12.

Figure 1 shows a unit cell 1 being of box-type. In other words, the unit cell 1 has a plan or footprint 2 which is a square. The unit cell 1 comprises nodal points 3 at the vertical edges of the unit cell 1. In the embodiment shown, three nodal points 3 are provided at each box edge in equidistant spacing. This results in a square arrangement of nodal points 3 in three levels 5.1, 5.2, 5.3 at different z coordinates. The unit cell 1 can be combined into a larger orthogonal grid 6, as an arrow 4 symbolizes. The unit cell 1 is the basis to generate a kit of elements. In the orthogonal grid 6, unit cells 1 are located side by side and in stacked configuration. Thereby, the orthogonal grid can cover any desired 3D volume and allows to generate 3D structures of any desired geometrical extension. The grid and the coordinates system can have oblique axes. The grid can be assembled from several different unit cells, wherein neighbouring unit cells (either within one level or across the levels) may be different. As pre-requisite, the arrangement of unit cells must fill the 3D space gap-less.

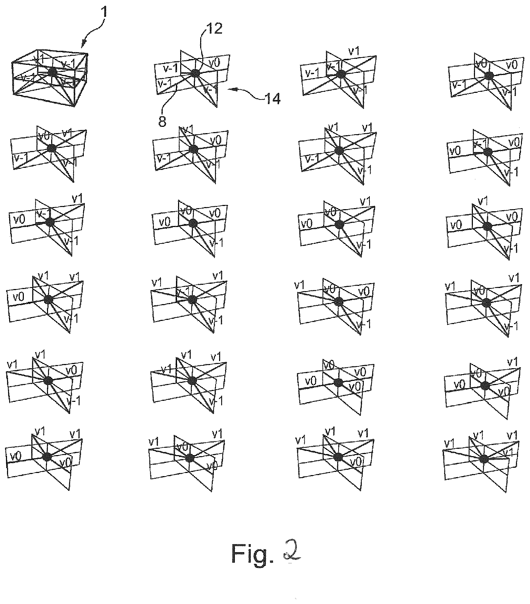

The invention generates elements by using the already explained rod-based approach. Rods 8 extending from a centre point 12 of the unit cell 1 to the nodal points 3 form each element 14 (Fig. 2). The methodology selects all different permutations of nodes at the four cell edges of the box-type unit cell 1. The number and distances of levels in the unit cell 1 may be varied. Each rod extends from the centre point 12 to a node 3 which was selected when going through the possible permutation of nodes 3. Thus, the elements 14 comprise a star-shaped configuration. These star-shaped elements 14 can be connected at the ends of the respective rods 8 to form a structure. The structure has the form of a mesh, if fields between neighbouring elements 14 remain unfilled. If the fields are filled, one obtains a surface structure.

According to the understanding of this invention, a structure being of a mesh-type is still gap-less as the mesh extends over any desirable continuous 3D form.

The star-shaped elements 14 according to Figure 2 always have a centre point 12 located in the centre of the unit cell 1 at which centre point 12 all rods 8 meet. This automatically results in an articulated surface for such elements 14 if fields between neighbouring elements 14 are filled.

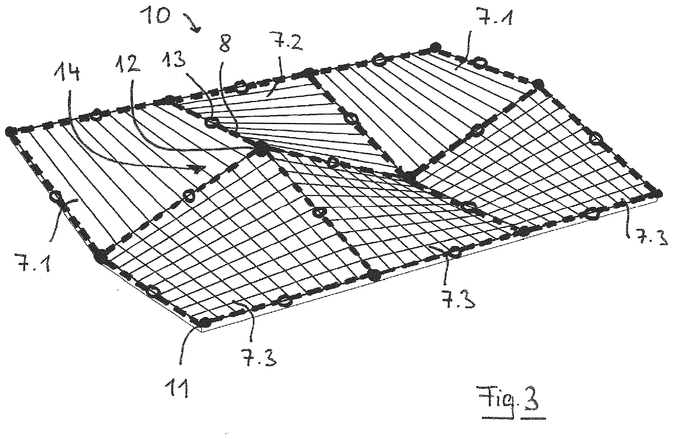

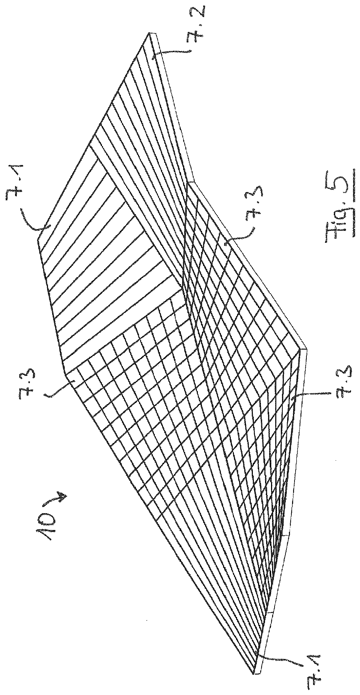

Figures 3-5 show different building parts 10 constructed from elements 7.1 , 7.2 and 7.3 in different configuration. As one easily sees, the building parts 10 of Figures 3-5 are quite different but still utilize the same elements 7 of the same kit. This shows the great degree of freedom the kit gives when designing a building as well as when constructing or composing such building or building part 10. The building parts 10 of Figures 3-5 are obtained from the star-shaped elements 14. The respective rods 8 are additionally and as an example in Figure 2 by dashed lines. The centre points 12 are located at vertices of the building part 10. Each rod 8 extends from a centre point 12 to a connection 13 (symbolized by open rings in Figure 3) with the next rod 8 of the neighbouring element 14.

The invention generates the building part 10 from star-shaped elements 14 obtained from connecting each nodal point 3 with the centre point 12 by a rod 8. The star-shaped elements 14 initially always generate a mesh-type structure. It can easily be converted to a surface type structure by filling the open fields between the mesh of rods 8 as desired.

The star-shaped elements 14 are connected at the ends of their rods 8.

When combining the star-shaped elements 14 to construct a structure 10, only such elements 14 must be in neighbouring configuration which have the same inclination of the rods 8.

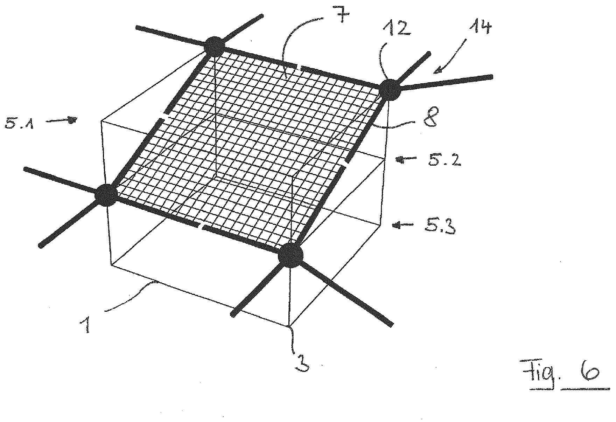

Figure 6 shows that frame-type elements 7 and star-shaped elements 14 obtained according to the principle of the embodiment of Figure 2 are analogous forms of each other. Figure 6 shows four star-shaped elements 14 the centre points 12 of which are located at the vertices of the element 7. The rods 8 of the star-shaped elements 14 extend along the element edges of the element 7. The rods are connected at their ends, and the elements 14 are combined such that the rod of one element is in continuation of the rod of the next element. To guarantee such continuing abutment of rods 8, the star-shaped elements 14 are connected such that only rods 8 are connected which have the same angle against the base plane of the unit cell. Obeying this rule results in the rods 8 of the elements 14 being located along the element edges of the element 7.

In Figure 2 reference was made to the unit cell 1 when generating the elements 14. It should be noted that in many embodiments these unit cells 1 are not identically, in particular regarding their location in the grid 6. As according to the principle of Figure 2 the centre points 12 of each star-shaped element 14 are located in the centre of the unit cell 1, it becomes clear that the unit cell 1 shown in Figure 6 relates regarding location and orientation to the generating process of frame-type element 7. A unit cell which would be used for the star-shaped element 14 would be shifted, and in some application also rotated against the unit cell 1 shown in Figure 6. This shift and rotation ensures that (a) the centre points 14 are located in the centre of the unit cell 1, and (b) the rods extend to towards the edges of the unit cell 1.

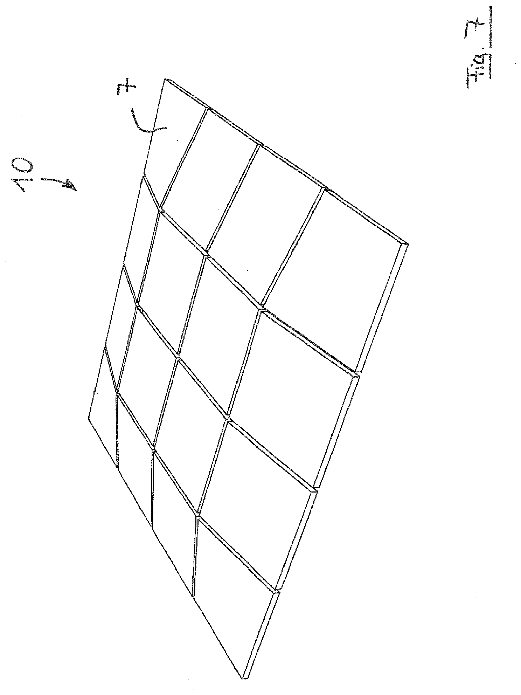

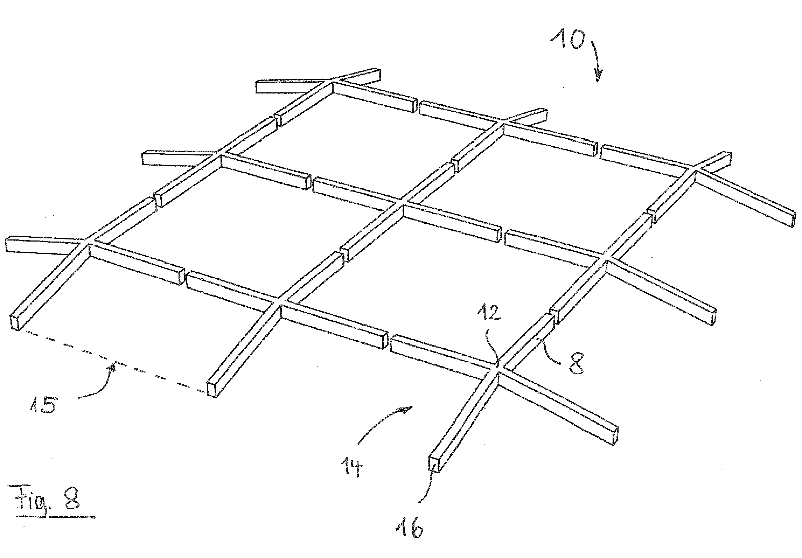

Figure 7 shows a building part 10 which was generated from elements 7. Figure 8 shows a very similar building part 10 generated from the inventive elements 14. A comparison of both views clearly shows the similarity as well as the difference between the elements 7 and 14. Elements 7 are connected along their element edges. Elements 14 are connected at the ends 16 of rods 8. Using the elements 7 always result in a closed edge of the building part 10, whereas the elements 14 result in an open edge 15. If such open edge is not desired, it is to be closed by a connection or by using a further star-shaped element which may have a lesser number of rods to allow a closed edge of the building part 10. Whereas the principle of composing or constructing the building part 10 from elements 7 or elements 14 are fairly similar, the star-shaped elements 14 give a higher degree of freedom for the surface itself. The opening between a set of four star-shaped elements 14 in Figure 8 can be left open or closed by any structure, which in particular needs not to be plane. E.g. one could use dome-shaped parts to close the openings between a set of four star-shaped elements 14.

It should be noted that the star-shaped elements 14 needs not to have exactly four rods 8. The number of rods is equal to the number of edges of the footprint 2 of the unit cell 1. In the embodiment of Figures 7 and 8, elements were obtained from a unit cell 1 having a square footprint 2 resulting in elements 14 having four rods. The number may be different, of course.

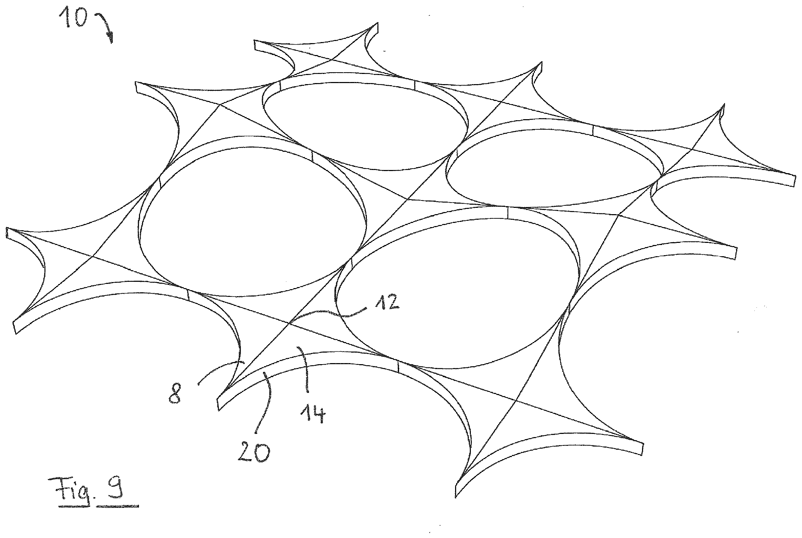

Figure 9 shows a building part 10 composed or constructed from star-shaped elements 14 which have special types of rods 8. The rods are not simple straight bars having parallel side faces but are arrow-like resulting in curved connecting faces 20 between neighbouring rods. Apart from this feature, the star-shaped elements 14 are identical to the rod-type star-shaped element 14 of Figure 6. Again, rods 8 of the same inclination are connected to form the building part 10, and between a set of four connected elements 14, an opening exists.

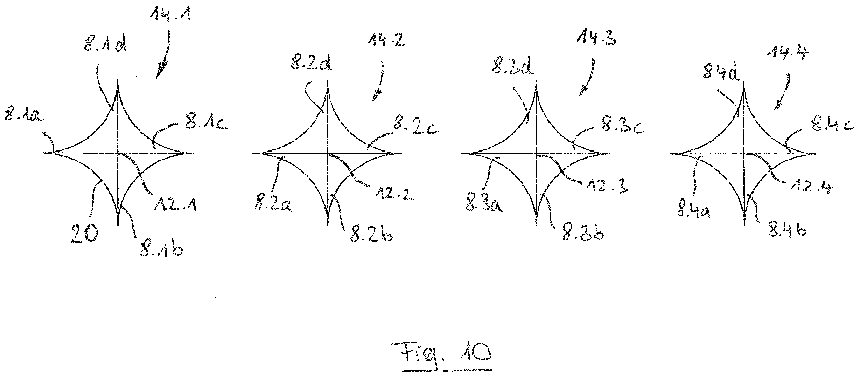

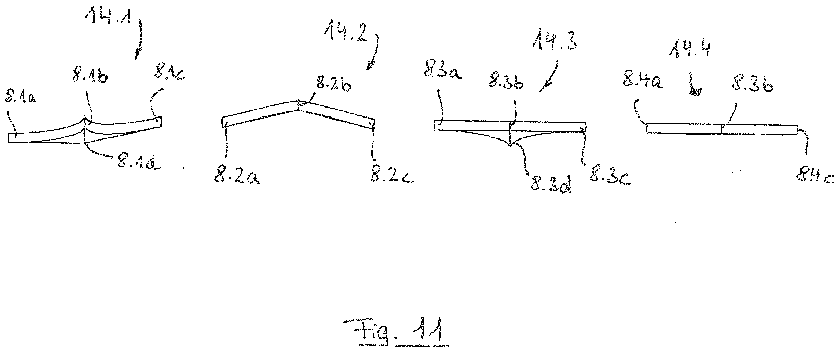

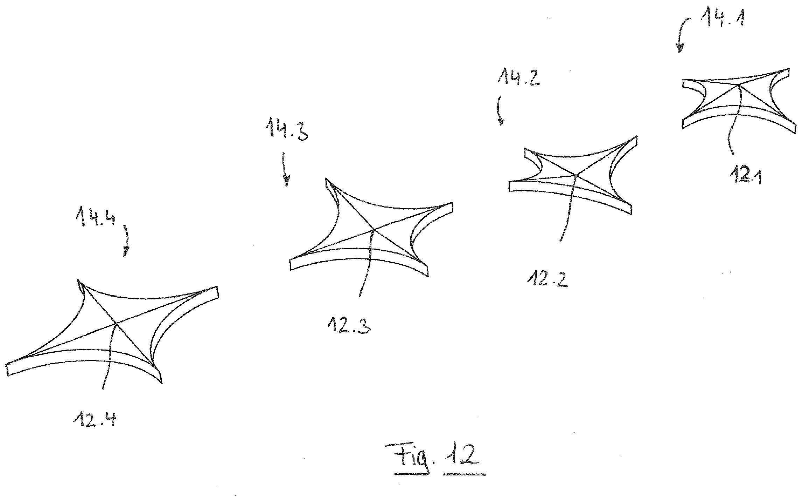

Figure 10 shows a plane view, Figure 11 a side view and Figure 12 a perspective view of the four elements 14 used in the building part 10. Of course, these four elements are only a subset of the kit of elements 14. The four rods are identified by suffixes "a", "b", "c" and "d" for each rod. A further suffix ".1", ".2", ".3" and ".4" identifies the individual elements 14 and their rods 18.

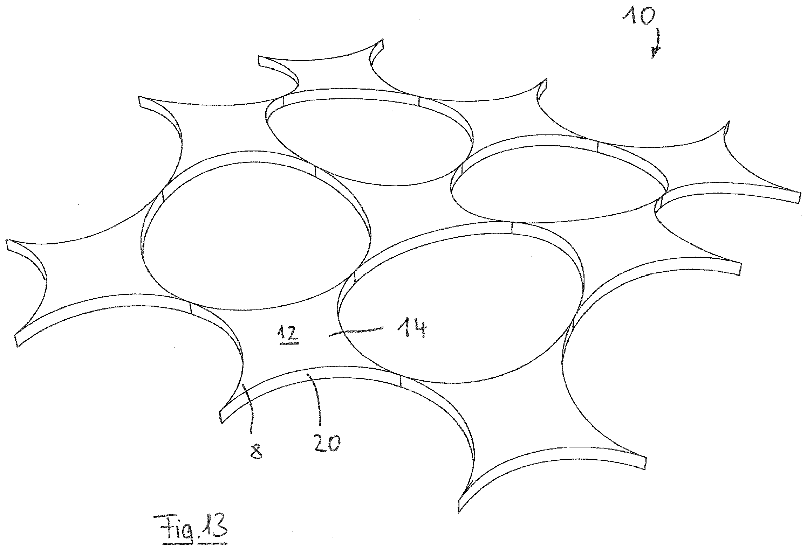

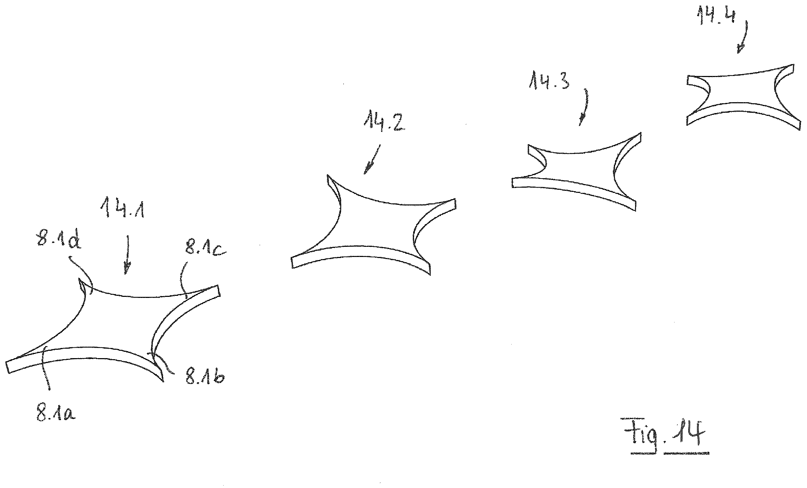

The rods 8 of the elements 14 of Figures 9-12 are angled to each other with the vertex being located at the centre point 12, because the rods 8 are straight. However, curved rods are equally possible as Figures 13-14 show. Each rod 8 is curved along a main axis which runs from the centre to the end of the rod. When connecting elements 14, rods are connected which have the same inclination regarding the main axis. The effect of this rule is that the openings between a set of connected elements 14 have a continues edge.

In a further embodiment, the rods 8 do not have concave connection faces 20 but convex ones. This results in exactly the negative of Figure 13, i.e. the openings in Figure 13 turn to elements 14, and the elements 14 are converted to openings.

The elements 14 can be used to build a building in real world. The described method of generating elements, thus, relates to building real world elements and constructing buildings or structures therefrom.

The important feature of the unit cell based method is the control of the footprint and number of elements which are generated and then used for composing or constructing gap-less surface or frame structures. Two factors determine how many members a particular kit of elements forms.

These factors are the cross-section of the unit cell, and the stepping value. The cross-section of the unit cell influences the number of members of the kit. With the same growth parameter setting, the basic square kit of elements has fewer members, six unique shapes, than the rectangular kit, which has thirteen. The reason is that the rectangular unit cell frame has two different lengths of edges. When the elements are generated one embodiment method, the process applies a different filter to that for a square unit cell frame with two symmetry axes. Here, two types of rotation have to be considered and there is only a single axis of symmetry.

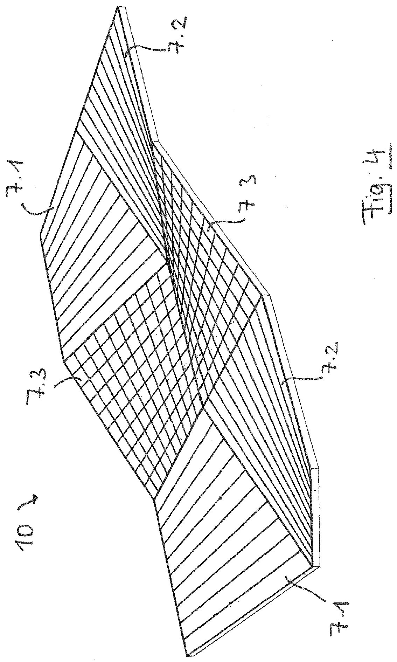

The second cause that increases the number of parts is the value for the allowed stepping in the z direction. It is linked to the process of placing vertices up or down, or keeping them level. The number of possible combinations of vertex positions depends on the value of the level steps allowed. For instance, when two level steps are allowed (as in Figs. 4 and 8), the procedure goes through all combinations of placing vertices one unit or two units up; the same is possible when the vertices are placed downwards, or they are kept at the same level.

In a programme realising the method, each element is described by a sequence of vectors (x, y, z). The x and y values of each element are the known parameters. They are defined through the parameter settings, wherein z is a variable. An element is described by providing a sequence of z values of its vectors, as x and y are already identified. The programme code generates a kit by going through all the possible vector combinations within the constraints. These constraints, expressed in the general notation, are n, the number of edges, and s, the number of level steppings. The vectors can go s levels up or down, or remain at the same level. A rule which only allows s level stepping between the neighbouring vertices is applicable here. The vector strings are checked to see if they define valid elements, i.e. closed frames. A description is valid if the sum of the z-vector values is 0. Valid elements are then compared, to filter out repetitions.

Repetitions are rotations of the same vector sequence. Unique elements are recognised and their rotations are identified as types that have been defined already.

If one element cannot become the other by a simple rotation, the two elements are distinct. The rotation and translations of an initial form are allowed, and counted as non-unique repetitions of the initial shape. Reflections are not considered to be repetitions.

The program comprises three parts:
1. Configure parameter settings. The user inputs the parameters which determine the features of the elements (shape, representation, height of z-directional level jump and number of allowed level steps).
2. Iterate through all possible vector combinations. This process starts from a planar field of vectors and goes through all possible combinations of the vector configurations, considering the number of allowed level steps. Check whether it is a valid element; the z-vectors have to sum up to 0.
3. Iterate through all elements and find the unique ones. This part of the procedure filters out those elements which are rotations of unique elements that have already been defined. If the element is not a rotation of an earlier defined element, then it is indicated as a new unique one. Reflections of a particular element count as new, unique ones. Colour coding is assigned, and unique elements and their respective rotations carry the same colour.

In one embodiment the generation of a kit is implemented as a linear counting procedure and then as a grouping procedure. The number of elements is counted, at the same time as the vectors are stored which are necessary to actually draw the geometries. This combines the control of the number, as well as the geometrical definition of the elements. An element factory program class was split into two separate streams, one for each representation: one to generate tiles and the other to generate nodes. This important decision is of advantage (but not mandatory), as it is fundamentally different to only changing the way in which the elements were displayed on the screen. This structure suggests a future extension to the program, where the user can pick individual elements from the preview and, in this way, decide which element enters the formgenerating process.

The growth model based on the unit cell principle allows the generation of discrete geometry kits. These kits are form families, of which each part can be connected to itself or to the other parts of the same family in various ways. Different larger surface geometries can be created using the same kit of elements.

This provides a method to generate closed componential surfaces in a bottom-up process using discrete elements. The unit cell is an architecturally integrated system. The control of the number of parts, the known physical offset, the interface to neighbouring parts and the discreteness of the local geometries, which allows geometries to be easily transferred between the necessary software packages, informs the method using real-world parameters.

Elements which are defined within the three-dimensional unit cell frame, and therefore in a larger three-dimensional grid, carry the features of the underlying grid. The geometries defined within this grid will be repetitive if the matrix is regular, featuring repetitive cells, i.e. copies of cells. The term "repetition" here involves repeated shapes and repeated angles between parts, and thereby connections and nodes. The more complex the grid, the more complex the geometry system defined within it. The grid can be associated with any coordinate system: the Cartesian coordinate system of the current implementation can, for example, be replaced by a polar coordinate system. In summary, elements which are defined through the process of a combinational definition of vectors in a particular unit cell frame, such as an orthogonal box, create a kit of elements. These elements carry shared features, namely the length and the shape of their edges, which allow them to be connected to each other. They also have distinct geometric characteristics through the different combinations of diagonally lifted, horizontal or lowered vectors. The distinction allows for diversity in global configurations when connecting the elements.

Each kit of elements created in a particular unit cell will create a catalogue of possible global geometry configurations. The greater the repetition in the pattern of the global three-dimensional grid, the greater the number of repeating elements which are defined within this grid. The principle of repetition can be maintained, if through spatial congruent transformations which are shape- and distance-preserving transformations (translation and rotation), one unit cell fits into different unit cells of the same cell assembly.

## Claims

1. A method of generating a kit of physical elements (14) adapted for constructing diverse, gap-less 3D mesh-type structures (10) for buildings, namely building hulls, roofs, facades, internal walls, partitions, shells, cladding, substructures, frame structures or surface structures, wherein the method comprises the following computer-implemented steps (a) to (f):
(a) defining a coordinate system comprising a z axis,
(b) defining a unit cell (1) or a set of unit cells with each unit cell (1) having the geometrical shape of a generalized cylinder, a cross section (2) of which is - in a certain plane - a simple polygon having corners, the side surface of the respective unit cells (1) thus having cell edges each extending from one of the corners and parallel to the z direction, wherein the cross sections (2) of all unit cells are adapted to fill the certain plane gap-less by adjoining several copies of the polygons, wherein the certain plane is at a pre-defined angle to the z axis,
(c) defining for each unit cell (1) a group of nodal points (3) located on the cell edges wherein all cell edges have nodal points (3) of the same number and in the same equidistant spacing along the z axis, resulting in the nodal points (3) of each unit cell (1) being organized in levels (5.1, 5.2, 5.3) equidistant along the z axis,
(d) defining a maximum allowed number of level step difference along the z axis, and
(e) generating an element (14) of the kit by
-- selecting for one of the unit cells (1) at each cell edge a single one of the nodal points (3), wherein selected nodal points (3), which belong to neighbouring cell edges, differ in their level step difference along the z axis not more than the maximum allowed number,
-- forming a star-shaped element (14) by connecting the selected nodal points (3) with a centre point (12) located centrally in the unit cell (1) by rods (8) selected from a set of rod shapes, wherein for each level step difference a certain rod shape is predefined, and
-- adding the element (14) to the kit,
(f) wherein different elements (14) of the kit are generated by repeating step (e) for all unit cells (1) and for different selections of nodal points (3), wherein all rods (8) of the same inclination against the certain plane of the unit cell are provided with the same rod shape,
wherein the elements (14) are configured that each of their rods (8) get connected at the rod end to exactly one rod end of another element (14) and that only rods (8) of the same inclination get connected, and
wherein the method further comprises the step: building the elements from material.

2. The method according to claim 1, wherein step (e) comprises finalizing the element of the kit by providing the star-shaped element with rods (8) of pre-defined thickness along the z axis at the rod ends.

3. The method according to any of the above claims, wherein the rods (8) of the star-shaped element (14) have convex or concave side faces.

4. The method according to claim 1, 2 or 3, wherein step (e) comprises a checking step in which the element (14) is checked for being a rotated or flipped copy of an already generated element (14), wherein the element (14) is added to the kit only if it is not such copy.

5. The method according to any of the above claims, wherein the polygon is or the polygons are regular.

6. The method according to claim 5, wherein the polygons have 3, 4, 5, 6 or 8 corners.

7. A method for constructing a 3D structure (10), comprising generating a kit of elements (14) according to the method of any of claims 1-6 and constructing the 3D structure (10) from the elements (14).

8. The method of claim 7, wherein the 3D structure (10) comprises a mesh formed by the rods (8), wherein open fields in the mesh are filled.

9. A kit of physical elements adapted for constructing diverse, gap-less 3D mesh-type structures (10) for buildings, namely building hulls, roofs, facades, internal walls, partitions, shells, cladding, substructures, frame structures or surface structures,
- wherein all elements (14) fit each into a unit cell (1) having the geometrical shape of a generalized cylinder, a cross section (2) of which has - in a certain plane - the form of a simple polygon having corners and is adapted to fill the certain plane gap-less by adjoining several copies of the cross section, the side surface of the respective unit cell (1) having unit cell edges each extending from one corner of the cross section and parallel to a z direction,
- wherein the elements (14) are star-shaped each comprising rods (8) extending from a centre point (12) located centrally in the unit cell (1) and fit into the unit cell such that the ends of the rods (8) of each element (14) are located on the unit cell edges and wherein the ends of the rods (8) of different elements (14) which are associated to the same unit cell edge differ in z direction only by a spacing which is n-times a z spacing constant, with *n* being an integer from [0; n_max], with n_max being a maximum allowed number of level step difference, whereby all rods (8) are either level with the certain plane or have an inclination to the certain plane from a group of inclinations each having an angle to the certain plane,
- wherein the elements (14) have in projection to the certain plane a footprint (2) which is adapted to fill the certain plane gap-less by forming the mesh in adjoining several copies of the footprint (2),
- wherein all rods (8) having the same angle against the certain plane have the same rod shape and
- wherein the elements (14) are configured that their rods (8) get connected at the rod end to exactly one rod end of another element (14) and that only rods (8) of the same angle against the certain plane get connected.

10. The kit of claim 9, wherein the rods (8) of the star-shaped elements (14) have convex or concave side faces.

## Patentansprüche

1. Verfahren zum Erzeugen eines Bausatzes physischer Elemente (14), die zum Bauen diverser, lückenloser 3D-Netzstrukturen (10) für Gebäude, nämlich Gebäudehüllen, Dächer, Fassaden, Innenwände, Trennwände, Rohbauten, Verkleidungen, Unterstrukturen, Rahmenkonstruktionen oder Oberflächenstrukturen, eingerichtet sind, wobei das Verfahren die folgenden computerimplementierten Schritte (a) bis (f) umfasst:
(a) Definieren eines Koordinatensystems mit einer Z-Achse,
(b) Definieren einer Einheitszelle (1) oder eines Satzes von Einheitszellen, wobei jede Einheitszelle (1) die geometrische Form eines verallgemeinerten Zylinders aufweist, dessen Querschnitt (2) in einer bestimmten Ebene ein einfaches Vieleck mit Ecken ist, wobei die Seitenfläche der jeweiligen Einheitszelle (1) somit jeweils von einer der Ecken ausgehende, zur Z-Richtung parallele Zellenkanten aufweist, wobei die Querschnitte (2) aller Einheitszellen dazu eingerichtet sind, die bestimmte Ebene durch Aneinanderfügen mehrerer Kopien der Polygone lückenlos auszufüllen, wobei die bestimmte Ebene in einem vordefinierten Winkel zur Z-Achse steht,
(c) Definieren einer Gruppe von Knotenpunkten (3) für jede Einheitszelle (1), die sich an den Zellenkanten befinden, wobei alle Zellenkanten Knotenpunkte (3) mit derselben Anzahl und in demselben äquidistanten Abstand entlang der Z-Achse aufweisen, was dazu führt, dass die Knotenpunkte (3) jeder Einheitszelle (1) in entlang der Z-Achse äquidistanten Höhen (5.1, 5.2, 5.3) organisiert sind,
(d) Definieren einer maximal zulässigen Anzahl von Höhenstufendifferenzen entlang der Z-Achse und
(e) Erzeugen eines Elements (14) des Bausatzes durch
-- Auswählen eines einzelnen der Knotenpunkte (3) für eine der Einheitszellen (1) an jeder Zellenkante, wobei sich die ausgewählten Knotenpunkte (3), die zu benachbarten Zellenkanten gehören, in ihrer Höhenstufendifferenz entlang der Z-Achse nicht mehr als die maximal zulässige Anzahl unterscheiden,
-- Bilden eines sternförmigen Elements (14) durch Verbinden der ausgewählten Knotenpunkte (3) mit einem zentral in der Einheitszelle (1) gelegenen Mittelpunkt (12) durch Stäbe (8), die aus einem Satz von Stabformen ausgewählt sind, wobei für jede Höhenstufendifferenz eine bestimmte Stabform vordefiniert ist, und
-- Hinzufügen des Elements (14) zu dem Bausatz,
(f) wobei verschiedene Elemente (14) des Bausatzes durch Wiederholen von Schritt (e) für alle Einheitszellen (1) und für verschiedene Auswahlen von Knotenpunkten (3) erzeugt werden, wobei alle Stäbe (8) mit der gleichen Neigung gegen die bestimmte Ebene der Einheitszelle mit der gleichen Stabform versehen werden,
wobei die Elemente (14) so gestaltet sind, dass jeder ihrer Stäbe (8) am Stabende mit genau einem Stabende eines anderen Elements (14) verbunden wird und dass nur Stäbe (8) mit der gleichen Neigung verbunden werden, und
wobei das Verfahren ferner den Schritt umfasst: Aufbauen der Elemente aus Material.

2. Verfahren gemäß Anspruch 1, wobei Schritt (e) das Fertigstellen des Elements des Bausatzes umfasst, indem das sternförmige Element mit Stäben (8) einer vordefinierten Dicke entlang der Z-Achse an den Stabenden versehen wird.

3. Verfahren gemäß einem der vorhergehenden Ansprüche, wobei die Stäbe (8) des sternförmigen Elements (14) konvexe oder konkave Seitenflächen aufweisen.

4. Verfahren gemäß Anspruch 1, 2 oder 3, wobei Schritt (e) einen Kontrollschritt umfasst, in dem das Element (14) daraufhin kontrolliert wird, ob es eine gedrehte oder gespiegelte Kopie eines bereits erzeugten Elements (14) ist, wobei das Element (14) dem Bausatz nur hinzugefügt wird, wenn es keine solche Kopie ist.

5. Verfahren gemäß einem der obigen Ansprüche, wobei das Polygon oder die Polygone regelmäßig ist/sind.

6. Verfahren gemäß Anspruch 5, wobei die Polygone 3, 4, 5, 6 oder 8 Ecken aufweisen.

7. Verfahren zum Bauen einer 3D-Struktur (10), umfassend das Erzeugen eines Bausatzes von Elementen (14) gemäß dem Verfahren gemäß einem der Ansprüche 1-6 und das Bauen der 3D-Struktur (10) aus den Elementen (14).

8. Verfahren gemäß Anspruch 7, wobei die 3D-Struktur (10) ein durch die Stäbe (8) gebildetes Netz umfasst, wobei offene Felder in dem Netz gefüllt werden.

9. Bausatz physischer Elemente, der für den Bau diverser, lückenloser 3D-Netzstrukturen (10) für Gebäude, nämlich Gebäudehüllen, Dächer, Fassaden, Innenwände, Trennwände, Rohbauten, Verkleidungen, Unterstrukturen, Rahmenstrukturen oder Oberflächenstrukturen, eingerichtet ist,
- wobei alle Elemente (14) jeweils in eine Einheitszelle (1) mit der geometrischen Form eines verallgemeinerten Zylinders passen, deren Querschnitt (2) in einer bestimmten Ebene die Form eines einfachen Vielecks mit Ecken aufweist und dazu eingerichtet ist, die bestimmte Ebene durch Aneinanderfügen mehrerer Kopien des Querschnitts lückenlos auszufüllen, wobei die Seitenfläche der jeweiligen Einheitszelle (1) Einheitszellenkanten aufweist, die sich jeweils von einer Ecke des Querschnitts aus und parallel zu einer Z-Richtung erstrecken,
- wobei die Elemente (14) sternförmig sind und jeweils Stäbe (8) aufweisen, die sich von einem zentral in der Einheitszelle (1) angeordneten Mittelpunkt (12) aus erstrecken und so in die Einheitszelle eingepasst sind, dass die Enden der Stäbe (8) jedes Elements (14) an den Einheitszellenkanten liegen, und wobei sich die Enden der Stäbe (8) verschiedener Elemente (14), die derselben Einheitszellenkante zugeordnet sind, in Z-Richtung nur durch einen Abstand unterscheiden, der das n-fache einer Z-Abstandskonstante ist, wobei *n* eine ganze Zahl aus [0; n_max] ist, wobei n_max eine maximal zulässige Anzahl von Höhenstufendifferenzen ist,
wobei alle Stäbe (8) entweder auf einer Höhe mit der bestimmten Ebene liegen oder eine Neigung zu der bestimmten Ebene aus einer Gruppe von Neigungen aufweisen, die jeweils einen Winkel zu der bestimmten Ebene haben,
- wobei die Elemente (14) in Projektion auf die bestimmte Ebene eine Grundfläche (2) aufweisen, die dazu eingerichtet ist, die bestimmte Ebene lückenlos zu füllen, indem das Netz in mehreren aneinandergrenzenden Kopien der Grundfläche (2) gebildet wird,
- wobei alle Stäbe (8), die den gleichen Winkel zu der bestimmten Ebene aufweisen, die gleiche Stabform haben und
- wobei die Elemente (14) so gestaltet sind, dass ihre Stäbe (8) am Stabende mit genau einem Stabende eines anderen Elements (14) verbunden werden und dass nur Stäbe (8) mit dem gleichen Winkel zur bestimmten Ebene verbunden werden.

10. Bausatz gemäß Anspruch 9, wobei die Stäbe (8) der sternförmigen Elemente (14) konvexe oder konkave Seitenflächen aufweisen.

## Revendications

1. Procédé de génération d'un kit d'éléments physiques (14) conçu pour construire diverses structures de type maille en 3D sans espace (10) pour les bâtiments, à savoir des coques, toits, façades, murs intérieurs, cloisons, enveloppes, gainages, sous-structures, structures de bâti ou structures de surface des bâtiments, dans lequel le procédé comprend les étapes (a) à (f) suivantes mises en oeuvre par ordinateur :
(a) la définition d'un système de coordonnées comprenant un axe z ;
(b) la définition d'une cellule unitaire (1) ou d'un ensemble de cellules unitaires, chaque cellule unitaire (1) ayant la forme géométrique d'un cylindre généralisé, dont une section transversale (2) est, dans un certain plan, un polygone simple ayant des angles, la surface latérale des cellules unitaires respectives (1) présentant ainsi des bords de cellule s'étendant chacun à partir de l'un des angles et parallèlement à la direction z, les sections transversales (2) de toutes les cellules unitaires étant conçues pour remplir ledit plan sans espace en joignant plusieurs copies des polygones, dans lequel ledit plan est à un angle prédéfini par rapport à l'axe z,
(c) la définition pour chaque cellule unitaire (1) d'un groupe de points nodaux (3) situés sur les bords de cellule, dans lequel tous les bords de cellule ont des points nodaux (3) selon le même nombre et le même espacement équidistant le long de l'axe z, ce qui a pour effet que les points nodaux (3) de chaque cellule unitaire (1) sont organisés en niveaux (5.1, 5.2, 5.3) équidistants le long de l'axe z,
(d) la définition d'un nombre maximal autorisé de différences de niveau le long de l'axe z, et
(e) la génération d'un élément (14) du kit par
-- la sélection pour l'une des cellules unitaires (1) à chaque bord de cellule d'un seul des points nodaux (3), dans lequel les points nodaux sélectionnés (3) qui appartiennent à des bords de cellule voisins ne diffèrent pas dans leur différence de niveau le long de l'axe z de plus du nombre maximal autorisé,
-- la formation d'un élément en forme d'étoile (14) par la liaison des points nodaux sélectionnés (3) avec un point central (12) situé au centre de la cellule unitaire (1) au moyen de tiges (8) sélectionnées parmi un ensemble de formes de tige, dans lequel pour chaque différence de niveau une certaine forme de tige est prédéfinie, et
-- l'ajout de l'élément (14) au kit,
(f) dans lequel différents éléments (14) du kit sont générés par la répétition de l'étape (e) pour toutes les cellules unitaires (1) et pour différentes sélections de points nodaux (3), dans lequel toutes les tiges (8) de même inclinaison par rapport audit plan de la cellule unitaire sont dotées de la même forme de tige,
dans lequel les éléments (14) sont conçus de sorte que chacune de leurs tiges (8) soit reliée au niveau de l'extrémité de tige à exactement une extrémité de tige d'un autre élément (14) et que seules les tiges (8) de même inclinaison soient reliées, et
dans lequel le procédé comprend en outre l'étape de construction des éléments à partir du matériau.

2. Procédé selon la revendication 1, dans lequel l'étape (e) comprend la finalisation de l'élément du kit par la fourniture à l'élément en forme d'étoile de tiges (8) d'épaisseur prédéfinie long de l'axe z au niveau des extrémités de tige.

3. Procédé selon l'une quelconque des revendications précédentes, dans lequel les tiges (8) de l'élément en forme d'étoile (14) ont des faces latérales convexes ou concaves.

4. Procédé selon la revendication 1, 2 ou 3, dans lequel l'étape (e) comprend une étape de vérification dans laquelle il est vérifié que l'élément (14) est une copie retournée ou basculée d'un élément déjà généré (14), dans lequel l'élément (14) est ajouté au kit uniquement s'il n'est pas une telle copie.

5. Procédé selon l'une quelconque des revendications précédentes, dans lequel le polygone ou les polygones est/sont réguliers.

6. Procédé selon la revendication 5, dans lequel les polygones ont 3, 4, 5, 6 ou 8 angles.

7. Procédé de construction d'une structure en 3D (10), comprenant la génération d'un kit d'éléments (14) conformément au procédé selon l'une quelconque des revendications 1 à 6 et la construction de la structure en 3D (10) à partir des éléments.

8. Procédé selon la revendication 7, dans lequel la structure en 3D (10) comprend une maille formée par les tiges (8), dans lequel des champs ouverts dans la maille sont remplis.

9. Kit d'éléments physiques conçu pour construire diverses structures de type maille en 3D sans espace (10) pour les bâtiments, à savoir des coques, toits, façades, murs intérieurs, cloisons, enveloppes, gainages, sous-structures, structures de bâti ou structures de surface des bâtiments,
- dans lequel tous les éléments (14) s'ajustent chacun dans une cellule unitaire (1) ayant la forme géométrique d'un cylindre généralisé, dont une section transversale (2) a, dans un certain plan, la forme d'un polygone simple ayant des angles et est conçue pour remplir ledit plan sans espace en joignant plusieurs copies de la section transversale, la surface latérale de la cellule unitaire respective (1) ayant des bords de cellule s'étendant chacun à partir d'un angle de la section transversale et parallèlement à une direction z,
- dans lequel les éléments (14) sont en forme d'étoile comprenant chacun des tiges (8) s'étendant à partir d'un point central (12) situé au centre de la cellule unitaire (1) et s'ajustent dans la cellule unitaire de sorte que les extrémités des tiges (8) de chaque élément (14) soient situées sur les bords de la cellule unitaire et dans lequel les bords des tiges (8) de différents éléments (14) qui sont associés au même bord de cellule unitaire diffèrent dans la direction z uniquement d'un espacement qui est *n* fois égal à une constante d'espacement z, *n* étant un entier de [0; n_max], n_max étant un nombre maximal autorisé de différences de niveau,
moyennant quoi toutes les tiges (8) soit sont au niveau dudit plan soit ont une inclinaison par rapport audit plan parmi un groupe d'inclinaisons ayant chacune un angle par rapport audit plan,
- dans lequel les éléments (14) ont en projection par rapport audit plan une empreinte (2) qui est conçue pour remplir ledit plan sans espace par formation de la maille en joignant plusieurs copies de l'empreinte (2),
- dans lequel toutes les tiges (8) ayant le même angle par rapport audit plan ont la même forme de tige, et
- dans lequel les éléments (14) sont conçus de sorte que leurs tiges (8) soient reliées au niveau de l'extrémité de tige à exactement une extrémité de tige d'un autre élément (14) et que seules les tiges (8) de même angle par rapport audit plan soient reliées.

10. Kit selon la revendication 9, dans lequel les tiges (8) des éléments en forme d'étoile (14) ont des faces latérales convexes ou concaves.
